# EUROPEAN PATENT APPLICATION

(11) **EP 1 406 028 A1**
(43) Date of publication of application: **07.04.2004**
(21) Application number: 03255890.0
(22) Date of filing: 19.09.2003
(51) Int. Cl.: F16F 1/12, E05B 65/20

(54) **Spring device**

(30) Priority: 02.10.2002 GB 0222905
(71) Applicant: ArvinMeritor Light Vehicle Systems (UK) Ltd, Birmingham, West Midlands, B30 3BW (GB)
(72) Inventor: Fisher, Sidney Edward, Redditch Worcestershire B97 5YS (GB)
(74) Representative: Jones, John Bryn

(57) **Abstract**

A door latch assembly (5) including a support (8) having a release lever (10) moveable on the support (8) about a release lever axis (12), and a lock lever (22) moveable on the support (8) about a lock lever axis (24), said levers being connected by a spring device for movement of the levers between a latched unlocked position, a latched locked position and an unlatched position of the assembly, the spring device (30) having a first spring retainer (32A) with a first spring seat (43A) and a first load application feature (32A) and a second spring retainer (32B) with a second spring seat (43B) and a second load application feature (33B), the first and second spring seats being in substantially face to face relationship, the spring device (30) further including a resilient means (44) being supported between the first and second spring seats (43A, 43B) and further being positioned between the first and second load application features (33A, 33B), such that movement of the first and second spring seat (43A, 43B) towards each other by application of a tensile force applied to the first and second load application features (33A, 33B) is resisted by the resilient means, and said spring device acts resiliently by application of said tensile force to permit the release lever (10) to move relative to the lock lever (22) when the assembly is in the unlatched position.

## Description

The present invention relates to a spring device, in particular for use in a latch mechanism for doors of passenger vehicles such as cars.

Helical tension springs are well known and find uses in many applications. Typically the tension spring will comprise a series of coils of wire with each end of the wire being formed into a hook. The limiting factor on the design of such tension springs is the end hooks, since this is where the tension spring tends to break.

It is also known to provide tension springs which are preloaded. As the coils are wound, the wire itself is twisted such that the finished tension spring, when unloaded has adjacent coils in contact with each other. In order to stretch the spring, it is required to initially overcome the preload force, only following which will the spring extend. In other words, the spring will not extend if a load less than the preload is applied to the hook ends of the spring.

Whilst the preload on the spring can be varied within certain limits, for a particular configuration of spring (in terms of wire diameter, wire material, coil diameter) there is an upper limit to the amount of preload that it is possible to achieve.

As mentioned above, the present invention is particularly applicable to car door latches.

GB2328241 shows examples of where helical tension springs are used within door latches. Spring devices according to the present invention can be used in place of those helical tension springs shown in GB2328241.

According to the invention, there is provided a door latch assembly including a support having a release lever moveable on the support about a release lever axis, and a lock lever moveable on the support about a lock lever axis, said levers being connected by a spring device for movement of the levers between a latched unlocked position, a latched locked position and an unlatched position of the assembly, the spring device having a first spring retainer with a first spring seat and a first load application feature and a second spring retainer with a second spring seat and a second load application feature, the first and second spring seats being in substantially face to face relationship, the spring device further including a resilient means being supported between the first and second spring seats and further being positioned between the first and second load application features, such that movement of the first and second spring seat towards each other by application of a tensile force applied to the first and second load application features is resisted by the resilient means, and said spring device acts resiliently by application of said tensile force to permit the release lever to move relative to the lock lever when the assembly is in the unlatched position.

According to a further aspect of the present invention there is provided a spring device having a first spring retainer with a first spring seat and a first load application feature and a second spring retainer with a second spring seat and a second load application feature, the first and second spring seats being in substantially face to face relationship, the spring device further including a resilient means being supported between the first and second spring seats and further being positioned between the first and second load application features, such that movement of the first and second spring seat towards each other by application of a tensile force applied to the first and second load application features is resisted by the resilient means in which one of the first or second retainer includes a spring recess for receiving at least a part of the resilient means and the spring recess includes a further spring seat, the resilient means being mounted between said spring seat and said further spring seat.

According to a further aspect of the present invention there is provided a spring device having a first spring retainer with a first spring seat and a first load application feature and a second spring retainer with a second spring seat and a second load application feature, the first and second spring seats being in substantially face to face relationship, the spring device further including a resilient means being supported between the first and second spring seats and further being positioned between the first and second load application features, such that movement of the first and second spring seat towards each other by application of a tensile force applied to the first and second load application features is resisted by the resilient means in which the first and/or second retainer is/are made from sheet material, such as sheet metal, for example sheet steel.

The invention will now be described, by way of example only, with reference to the accompanying drawings in which:-
Figure 1 is a front view of a spring device according to the present invention in a relaxed condition,
Figure 2 shows a spring device on figure 1 in a tensioned condition,
Figure 3 shows a side view of figure 2,
Figure 4 shows a retainer of figure 1 in isolation,
Figure 5 shows the relative longitudinal positions of the retainers of figure 1 during assembly,
Figure 6 shows the longitudinal relative positions of the retainers of figure 1 once assembled,
Figure 7 and 8 show views of further embodiments of retainers, in the position corresponding to figures 5 and 6 respectively,
Figure 9 is a diagrammatic representation of a latch assembly in a locked latched condition, incorporating the spring device of figure 1,
Figure 10 is the latch assembly of figure 9 in an unlocked latched condition or an unlocked unlatched condition, and
Figure 11 shows the latch device of figure 9 in a unlatched (released) condition.

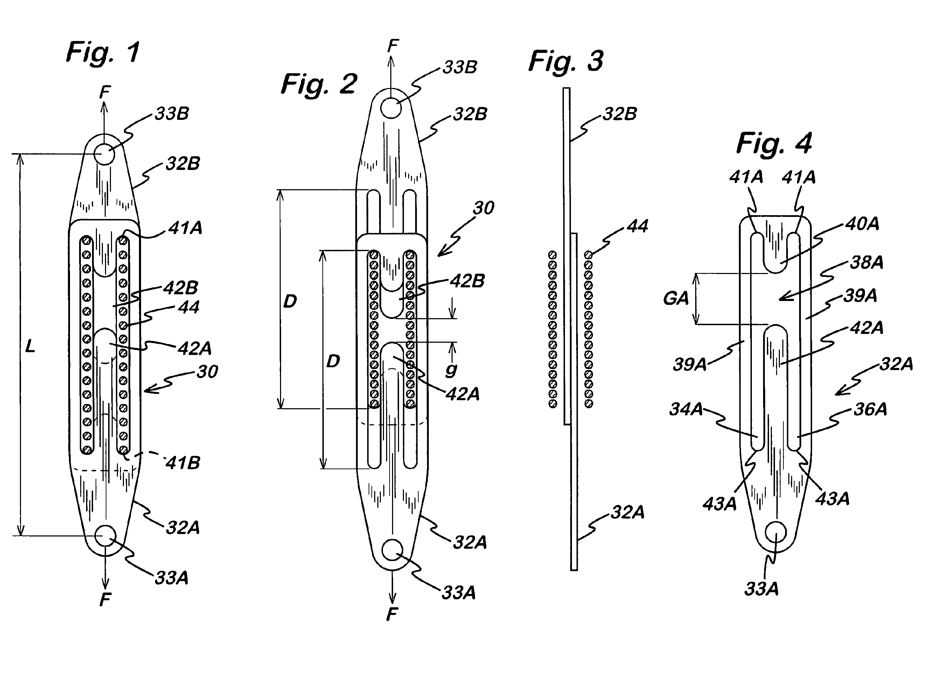

Consideration of figures 1 to 4 shows a spring device 30 having first and second spring retainers 32A and 32B and a resilient means in the form of a helical compression spring 44.

The spring retainers 32A and 32B are identical and are made (e.g. stamped) from a sheet material, in this case, sheet metal (e.g. sheet steel).

Retainer 32A is generally elongate and has a hole 33A at one end. In use, hole 33A acts as a load application feature (in conjunction with hole 33B) to apply tensile and compressive loads to the spring device.

There is also provided an "H" shaped recess 38A which is defined by edges 39A and projections 40A and 42A. It is apparent that projection 42A is longer than projection 40A. The recess 38A defines spring seats 43A at the ends of the longer legs of the H shaped recess, and spring seats 41 A at the end of the shorter legs of the H shaped recess. The distance between spring seats 41A and 43A is D.

The left hand portion of the H shaped recess 38A defines a slot 34A of length D and the right hand portion of H shaped recess 38A defines a slot 36A also of length D.

The free length of spring 44 is larger than D.

It can be seen from figure 1 and figure 3, that the device is assembled with the spring retainers being placed against each other in face to face relationship but having their appropriate holes 33 remote from each other. In this way, slot 34A of retainer 32A is aligned with slot 36B of retainer 32B, and slot 34B of retainer 32B is aligned with slot 36A of retainer 32A.

It can also be seen that spring seat 41A substantially faces spring seat 41B thus allowing the spring 44 to be positioned between the spring seats 41A and 41B. Furthermore, the spring 44 and spring seats 41A and 41B are positioned between the holes 33A and 33B, i.e. the holes 33A and 33B are substantially in line with the spring seats 41A and 4B, and are also in line with the spring 44.

Diametrically opposing portions of the coils of spring 44 sit in appropriate slots 34 and 36 of retainers 32A and 32B. Because the free length of spring 44 is larger than D, it is apparent that the spring device 30 as shown in it's "rest" position of figure 1 is preloaded. Thus, when the spring device is put under tension by applying a tensile load to holes 33A and 33B in the directions of arrow F, the spring device will only start to extend once the preload force has been overcome.

Similarly if a compressive force is applied to holes 33A and 33B, the spring device will only start to compress once the preload force have been overcome.

Figure 2 shows a spring device having been extended by the application of an appropriate force. It can be seen that whilst the device as a whole has been extended, the spring 44 has been compressed.

Figure 4 shows a gap GA between the ends of projections 40A and 42A.

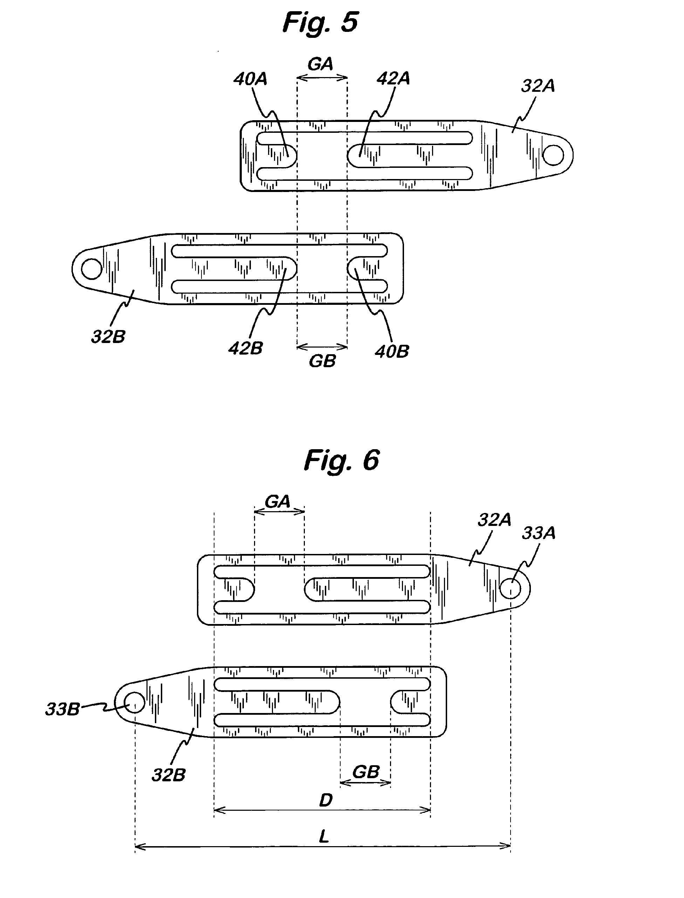

As mentioned above, projection 40A is shorter than projection 42A. This is advantageous since it can be seen that when assembled, with the spring device in the rest position of figure 1, projection 42A overlaps with projection 42B, thus ensuring that spring 44 remains in its correct position. This is best seen at figure 6 which shows an exploded view of the retainers in their correct longitudinal position when the spring device is in its rest condition. If can be seen that the spring seats are aligned and that gap GA is offset from gap GB. The figure shows the holes 33A and 33B spaced apart by distance L which, by consideration of figure 1 indicates the at rest working length of the spring device.

When the spring device is extended as shown in figure 2, the gap g between ends of projections 42A and 42B is smaller than the gap GA. Thus, even when extended, the spring is unlikely to escape from the recesses 38 through gap g.

The retainers 32A and 32B and spring 44 are assembled as follows:-

Consideration of figure 5 shows an exploded view of the retainers 32A and 32B in the correct longitudinal relative position for assembly of the spring. It can be seen, that when retainer 32B is placed on top of retainer 32A in this longitudinal position, gap GA aligns with gap GB. Under these circumstances projection 40A is in face to face relationship with projection 42B and projection 42A is in face to face relationship with projection 40B. Under these circumstances one end of spring 44 can be threaded onto adjacent projections 40A/42B via gap GA/GB, and the spring can then be compressed such that the other end can be threaded onto adjacent projections 42A/40B. Once this has been done, and the spring is released by the assembler, the spring device will spring to its at rest working length L.

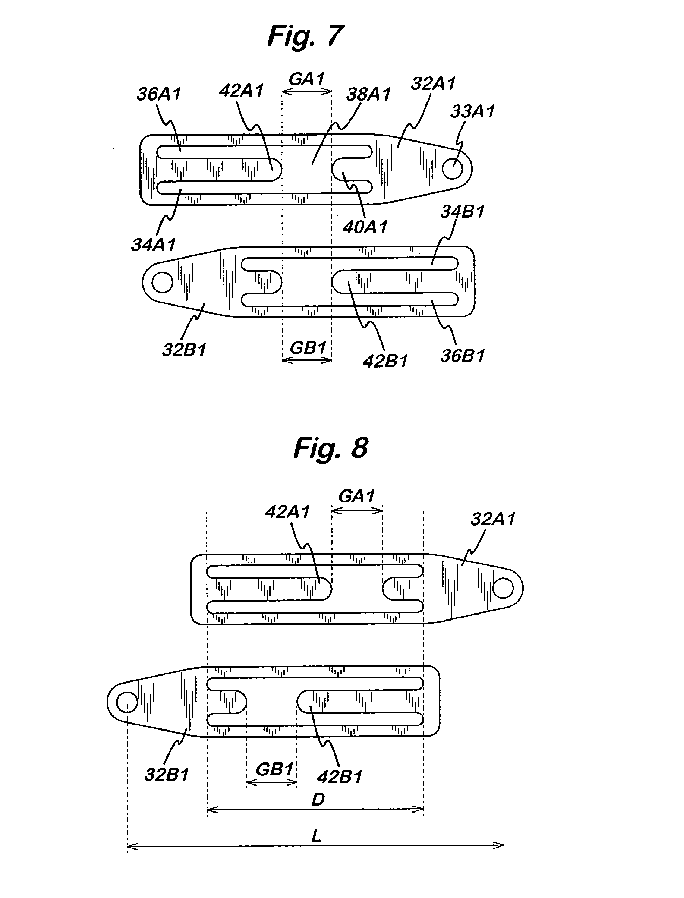

Figures 7 and 8 show further embodiments of spring retainers according to the present invention. Spring retainer 32B1 is identical to spring retainer 32A1.

The external profile and end hole of spring retainer 32A1 is identical to spring retainer 32A. The shape of the recess 38A1 is identical to the shape of recess 38A. However, it should be noted that the position of the long and short projections 42A1 and 40A1 have been reversed when compared with retainer 32A. In this case, short projection 40A1 is proximate hole 33A1, and long projection 42A1 is remote from hole 33A1.

The spring can be assembled onto spring retainers 32A1 and 32B1 by aligning gaps GA1 and GB 1. Consideration of Figure 8 shows that in this case, when the spring device is at a rest condition, gap GA1 sits to the right of gap GB1 when considering figure 8. The corresponding position of gaps GA and GB of figure 6 should be contrasted with figure 8.

By arranging the long and short projections thus, the long projection 42A1 will always overlap with the long projection 42B1 under any tensile load, thus ensuring that spring 44 cannot escape when the spring device is under tensile load.

It an be seen that the present invention provides for a spring device that can act in tension. Such a device does not have the hooked ends of known tension springs, and therefore does not suffer from breakage of said hooks. Furthermore, the present application is not limited by the design of spring hooks.

It can be seen that, where a preload is required, the amount of preload is no longer limited by the manufacturing techniques of the spring 44. Rather the preload is determined by the free length of the spring, when compared with the distance between the spring seats of the spring retainer.

Note that in further embodiments it is possible to have differing spring retainers, wherein the distance between the spring seat and further spring seat on one retainer is say D, and the distance between the corresponding spring seat and further spring seat on the other retainer is greater than D. In this way, there will be "lost motion" between the second retainer and the resilient means, but nevertheless when the resilient means is preloaded, and once the lost motion has been taken up, the device as a whole is preloaded.

In further embodiments the distance between the spring seat and further spring seat on both retainers could equal the free length of the spring. Such a device would have no preload and also no lost motion.

In yet further embodiments the distance between the spring seat and further spring seat on both retainers could be larger than the free length of the spring. Such a device would have lost motion between the retainers, and even when the lost motion was just taken up, there would be no preload.

It should be noted that the spring devices, in addition to acting in tension, can act in compression. Where a compressive load is applied to the spring device, which compressive load is less than the preload, then the spring device will not compress.

It will be appreciated that the spring is in "loose" abutment with the corresponding spring seat, i.e. the spring is not glued or otherwise permanently attached to the spring seat. Indeed, where the spring device acts in both compression and tension, the spring disengages the appropriate spring seats.

It will be apparent that with sufficient tension applied to holes 33A and 33B, spring 44 will become coil bound and the spring device will in effect become a solid link. This can be advantageous under certain circumstances.

Furthermore, with sufficient compressive force applied to holes 33A and 33B, spring 44 can again become coil bound and again the spring device will act as a solid link in compression. This can be advantageous in certain circumstances.

The use of the present invention in a door latch will now be described.

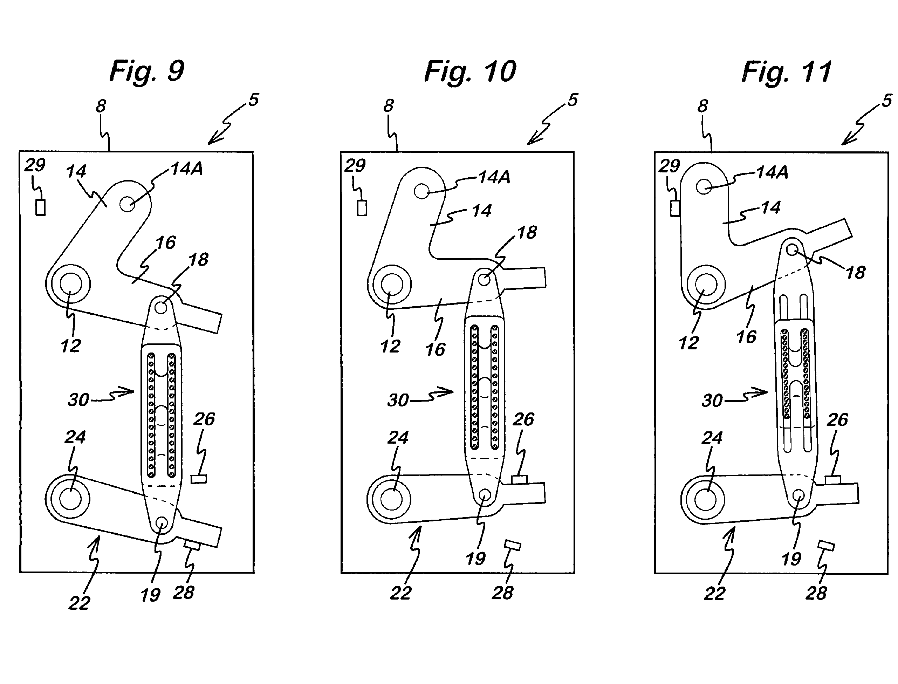

Referring to Figures 9 - 11, there is shown in part a vehicle door latch mechanism (assembly), the spring device is able to act in this manner, since it is preloaded, and a force required to move block arm 22 from the position shown in figure 5 to the position shown in figure 4 is less than the preload force. Thus, when the release lever 10 is moved from the position shown in figure 5 to the position shown in figure 4, the spring device is acting as a solid link generally designated 5, in which the arrangement and action of most of the operating parts of the mechanism and their mounting in the door are of conventional construction well known to those skilled in the art.

However, in summary a self-acting latching means includes a rotating claw or other latch which, in use, co-operates with a striker on a vehicle door post. The claw is retainable in a fully closed and first safety condition by a co-acting pawl. The pawl is linked in turn to a latch release member, in this example a release lever 10, of bell crank form, moveable about a release lever axis 12 on a support 8 in the form of a chassis of the latch. One portion 14 of the release lever 10 is linked (via hole 14A) to a manually operable interior handle (not shown) of the door.

A second portion 16 of the release lever 10 is pivotally connected at 18 to hole 33B at one end of the spring device 30. The other end of the spring device 30 is pivotally connected via hole 33A at 19 to a lock lever 22. The lock lever has a pivot 24 on the support 8.

The lock lever 22 is angularly displaceable, according to figures 9 and 10, between locked and unlocked positions respectively. These positions are determined respectively by fixed upper and lower (as viewed in the drawings) stops 26, 28 on the support 8, which are abutted by opposite sides of the lock lever 22.

The lock lever 22 is provided with an over centre spring (not shown) which urges it into abutment with one or other of the stops 26, 28 once it has passed over centre between them so that the locking means (operated by lock lever 22) will not remain in an intermediate position between its locked and unlocked states.

Upon opening (release) of the latch, the release lever 10 is angularly displaced to a position (figure 3) determined by a stop 30 on the support 8. This continued rotation of the release lever 10, with the lock lever 22 abutted against the stop 26, causes an elongation of the spring device 30.

The sequence of operation of the above mechanism is as follows:-

As noted above and in summary, the spring device 30 is provided with a preload, but without any lost motion between the spring retainers 32A and 32B.

In figure 9 the release lever 10 has been moved, by means of the inside door handle, to its extreme clockwise position as viewed in the drawings, this being the door secure (locked) position. The movement of the release lever 10 in this direction causes the spring device 30 to push the lock lever 22 positively into its locked position against the stop 28. The spring device 30 has thus acted in compression. This operation leaves the door latched and locked.

Figure 10 shows the release lever 10 moved anticlockwise to an intermediate neutral position. This effects unlocking, but not unlatching, of the door as the movement of the spring device 30 pulls the lock lever 22 anticlockwise to the stop 26. Note that the spring device 20 is strong enough to overcome the retaining force of the over-centre spring (not shown) without any deflection due to the preload and thus the device effectively again acts as a solid link when moving from the position shown in figures 9 to the position shown in figure 10.

To open the door the inside door handle is used to move the release lever 10 to its extreme anticlockwise position shown in figure 6, which will free the pawl from the claw allowing the door to unlatch for opening of the door. This motion of the release lever 10 is reacted against by the spring device 30 whilst the lock lever 22 remains undisturbed against the stop 26. Once unlatched, the interior door handle will be released and the spring device 30 urges or assists in urging the release lever 10 back as far as its neutral position in figure 10 and i.e. unlocked unlatched.

With the latch mechanism in the unlocked latched state of figure 10, in order to lock the door, the release lever 10 is rotated clockwise to the position shown in figure 9. This causes the spring device 30 to act in compression and push the lock lever 22 clockwise to the position shown in figure 9. Because of the preload in the spring device 30, it acts a solid link when moving from the position shown in figure 10 to the position shown in figure 9.

It can be seen that the present invention simplifies the design process for the latch since it is possible to design the spring device with higher preloads.

Further embodiments of the present invention are not limited to using helical compression springs. Thus, for example, a cylindrical tube of resilient material could replace spring 44. In yet further embodiments, by modifying the spring seats, solid blocks of resilient material such as rubber could be used.

Thus it will be appreciated that the terms "spring device", "spring retainer", and "spring seat" do not limit the present application to using helical compression springs.

## Claims

1. A door latch assembly (5) including a support (8) having a release lever (10) moveable on the support (8) about a release lever axis (12), and a lock lever (22) moveable on the support (8) about a lock lever axis (24), said levers being connected by a spring device for movement of the levers between a latched unlocked position, a latched locked position and an unlatched position of the assembly, the spring device (30) having a first spring retainer (32A) with a first spring seat (43A) and a first load application feature (32A) and a second spring retainer (32B) with a second spring seat (43B) and a second load application feature (33B), the first and second spring seats being in substantially face to face relationship, the spring device (30) further including a resilient means (44) being supported between the first and second spring seats (43A, 43B) and further being positioned between the first and second load application features (33A, 33B), such that movement of the first and second spring seat (43A, 43B) towards each other by application of a tensile force applied to the first and second load application features (33A, 33B) is resisted by the resilient means, and said spring device acts resiliently by application of said tensile force to permit the release lever (10) to move relative to the lock lever (22) when the assembly is in the unlatched position.

2. A door latch assembly as defined in claim 1 in which one of the first or second retainer (32A, 32B) includes a spring recess (38) for receiving at least a part of the resilient means (44).

3. A door latch assembly as defined in claim 2 in which the spring recess (38) includes a further spring seat (41), the resilient means (44) being mounted between said spring seat (43) and said further spring seat (41).

4. A door latch assembly as defined in claim 3 in which said spring seat (43) and further spring seat (41) are arranged such that the resilient means (44) is preloaded.

5. A door latch assembly as defined in claim 4 in which the spring device acts in a non resilient manner when the release lever and lock lever move to the latched unlocked position of the assembly from the latch locked position of the assembly.

6. A door latch assembly as defined in claim 4 or 5 in which the spring device acts in a non resilient manner when the release lever and lock lever move from the latched locked position of the assembly to the latched unlocked position of the assembly.

7. A door latch assembly as defined in any one of claims 4 to 6 in which the other of the first or second retainer (32A, 32B) includes a spring recess (38) having a spring seat (43) and a further spring seat (41) arranged to provide lost motion between said other retainer and the resilient means (44).

8. A door latch assembly as defined in any one of claims 4 to 6 in which the other of the first or second retainer (32A, 32B) includes a spring recess (38) having a spring seat (43) and a further spring seat (41) arranged to preload the resilient means (44) by an equivalent amount as said retainer (32).

9. A door latch assembly as defined in any preceding claim in which a first projection (42) projects from the spring seat (43) upon which is mounted the resilient means (44).

10. A door latch assembly as defined in claim 9 in which a further projection (40) projects from the further spring seat (41) on which is mounted the resilient means (44).

11. A door latch assembly as defined in claim 10 in which the other of the first or second retainers (32A, 32B) includes
a first projection (42) projecting from the spring seat (43) and
a further projection (40) projecting from the further spring seat (41)
such that a projection of one spring retainer (32) overlaps with a projection of the other spring retainer (32)
with the spring device (30) unloaded, and/or partially loaded, and/or fully loaded.

12. A door latch assembly as defined in claim 11 in which a projection of one spring retainer (32) overlaps with a projection of the other spring retainer (32) when the door latch assembly is in the unlatched position.

13. A spring device having a first spring retainer with a first spring seat and a first load application feature and a second spring retainer with a second spring seat and a second load application feature, the first and second spring seats being in substantially face to face relationship, the spring device further including a resilient means being supported between the first and second spring seats and further being positioned between the first and second load application features, such that movement of the first and second spring seat towards each other by application of a tensile force applied to the first and second load application features is resisted by the resilient means in which one of the first or second retainer includes a spring recess for receiving at least a part of the resilient means and the spring recess includes a further spring seat, the resilient means being mounted between said spring seat and said further spring seat.

14. A spring device as defined in claim 13 in which said spring seat and further spring seat are arranged such that the resilient means is preloaded.

15. A spring device having a first spring retainer with a first spring seat and a first load application feature and a second spring retainer with a second spring seat and a second load application feature, the first and second spring seats being in substantially face to face relationship, the spring device further including a resilient means being supported between the first and second spring seats and further being positioned between the first and second load application features, such that movement of the first and second spring seat towards each other by application of a tensile force applied to the first and second load application features is resisted by the resilient means in which the first and/or second retainer is/are made from sheet material, such as sheet metal, for example sheet steel.
